# FASCICULE DE BREVET EUROPEEN

(11) **EP 0 873 922 B1**
(45) Date de publication et mention de la délivrance du brevet: **28.05.2003**
(21) Numéro de dépôt: 98400964.7
(22) Date de dépôt: 20.04.1998
(51) Int. Cl.: B60S 1/34, B60S 1/16

(54) **Motoréducteur pour essuie-glace de véhicule automobile avec un conduit de liquide de nettoyage**
Motorgetriebe für Scheibenwischer eines Kraftfahrzeuges mit einer Waschwasser-Rohrleitung
Motor reduction unit for a vehicle windscreen wiper with a cleaning fluid conduit

(30) Priorité: 22.04.1997 FR 9704951
(43) Date de publication de la demande: 28.10.1998
(73) Titulaire: VALEO SYSTEMES D'ESSUYAGE, 78321 La Verrière (FR)
(72) Inventeur: Savy, Xavier, 86100 Chatellerault (FR); Princet, Joel, 86100 Chatellerault (FR)
(74) Mandataire: Le Forestier, Eric

(56) Documents cités:
- DE-A- 3 632 734
- GB-A- 1 051 880
- US-A- 4 428 533

## Description

L'invention concerne les motoréducteurs pour essuie-glace de véhicule automobile.

On connaît d'après le document EP-0 414 873 dans le mode de réalisation de la figure 12 un motoréducteur d'essuie-glace pour véhicule automobile dans lequel le balai d'essuie-glace est monté sur une extrémité d'un arbre de sortie du motoréducteur. Le motoréducteur est adapté à conférer à cet arbre un mouvement rotatif alternatif par rapport au carter du motoréducteur. Il est prévu un conduit d'alimentation en liquide de nettoyage de vitre, ce conduit s'étendant dans l'arbre de sortie du motoréducteur, coaxialement à celui-ci, de l'une à l'autre de ses extrémités axiales. Toutefois, ce motoréducteur a pour inconvénient que, pour assurer une bonne étanchéité entre l'arbre de sortie et les parties fixes du motoréducteur, il est nécessaire de fabriquer et d'assembler un nombre relativement élevé de pièces.

On connaît par ailleurs d'après le document DE-A-36 32734 un motoréducteur d'essuie-glace dans lequel le couvercle du carter comprend une tige d'une seule pièce avec ce couvercle et se prolongeant à l'extérieur du carter. Un arbre creux est enfilé sur cette tige. Il sert de support au balai d'essuie-glace et est entraîné à rotation par le réducteur. La tige fixe est traversée suivant son axe par le conduit d'alimentation en liquide de nettoyage. Encore une fois, pour assurer une bonne étanchéité entre les parties fixes et les parties mobiles, ici au niveau du balai d'essuie-glace, il faut prévoir un nombre important de pièces ou un montage très précis de celles-ci.

Un but de l'invention est de pallier cet inconvénient en fournissant un motoréducteur différent, comprenant un nombre réduit de pièces et ne nécessitant pas un montage précis.

En vue de la réalisation de ce but, on prévoit selon l'invention un motoréducteur du type divulgué dans DE-A-3 632 734 et telle que définie pour la revendication 1.

Ainsi, le conduit peut être relié à d'autres parties fixes du motoréducteur pour assurer une bonne étanchéité sans nécessiter un nombre élevé de pièces ni un montage extrêmement précis.

Avantageusement, le conduit s'étend à distance de l'arbre.

Avantageusement, le conduit s'étend d'un seul côté de l'arbre.

Avantageusement, l'élément délimitant le conduit est en matière plastique.

Ainsi, le conduit peut être fabriqué par moulage à faible coût.

Avantageusement, l'élément délimitant le conduit comprend un fût adapté à recevoir un arbre de sortie du motoréducteur, le conduit s'étendant suivant une direction générale parallèle au fût.

Avantageusement, le conduit s'étend dans la paroi du fût.

Avantageusement, le conduit s'étend à distance de la paroi du fût.

Avantageusement, l'élément délimitant le conduit comprend des organes de fixation du motoréducteur au véhicule.

Avantageusement, il s'agit d'un motoréducteur pour essuie-glace arrière.

On prévoit également selon l'invention un carter pour motoréducteur d'essuie-glace de véhicule automobile, comprenant un socle et un couvercle adapté à obturer le socle en définissant une enceinte intérieure du carter, l'un parmi le socle et le couvercle délimitant un conduit adapté à transporter un liquide et isolé de l'enceinte intérieure, caractéisé en ce que l'élément délimitant le conduit présente un logement adapté à recevoir un arbre de sortie du motoréducteur, le conduit étant extérieur au logement.

D'autres caractéristiques et avantages de l'invention apparaîtront encore dans la description qui va suivre de deux modes préférés de réalisation donnés à titre d'exemples non limitatifs. Aux dessins annexés :
- la figure 1 est une vue partielle en perspective d'un motoréducteur selon un premier mode de réalisation de l'invention ;
- la figure 2 est une vue en coupe axiale suivant le plan II-II du motoréducteur de la figure 1, représenté monté sur une vitre de véhicule ;
- la figure 3 est une vue en coupe transversale suivant le plan III-III du motoréducteur de la figure 2 ; et
- la figure 4 est une vue partielle en coupe axiale d'un couvercle d'un motoréducteur selon un deuxième mode de réalisation de l'invention.

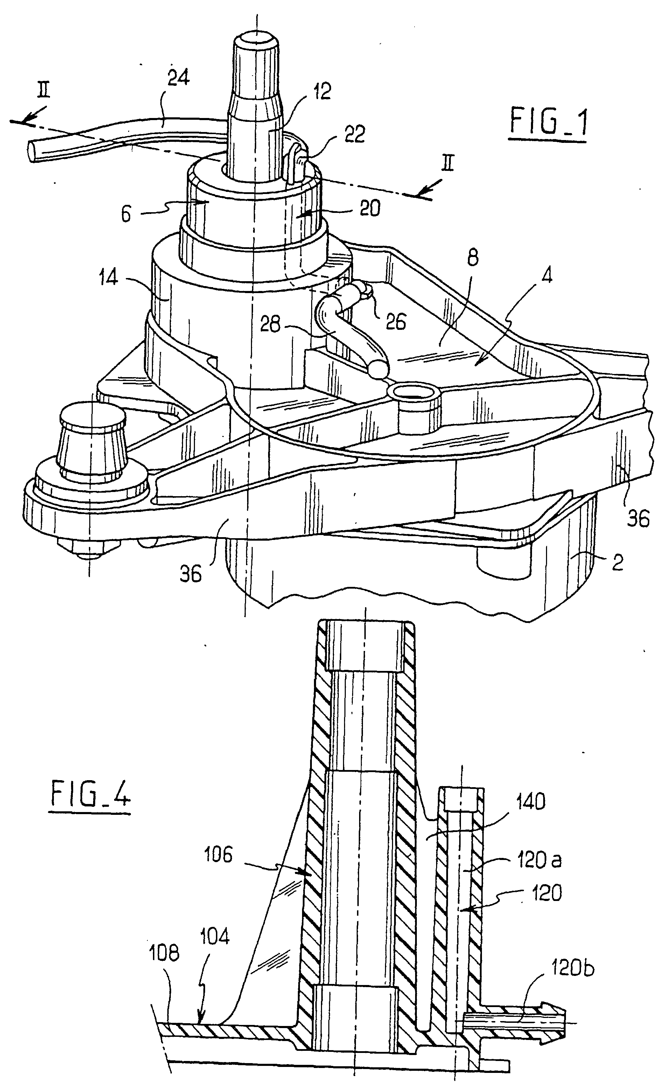

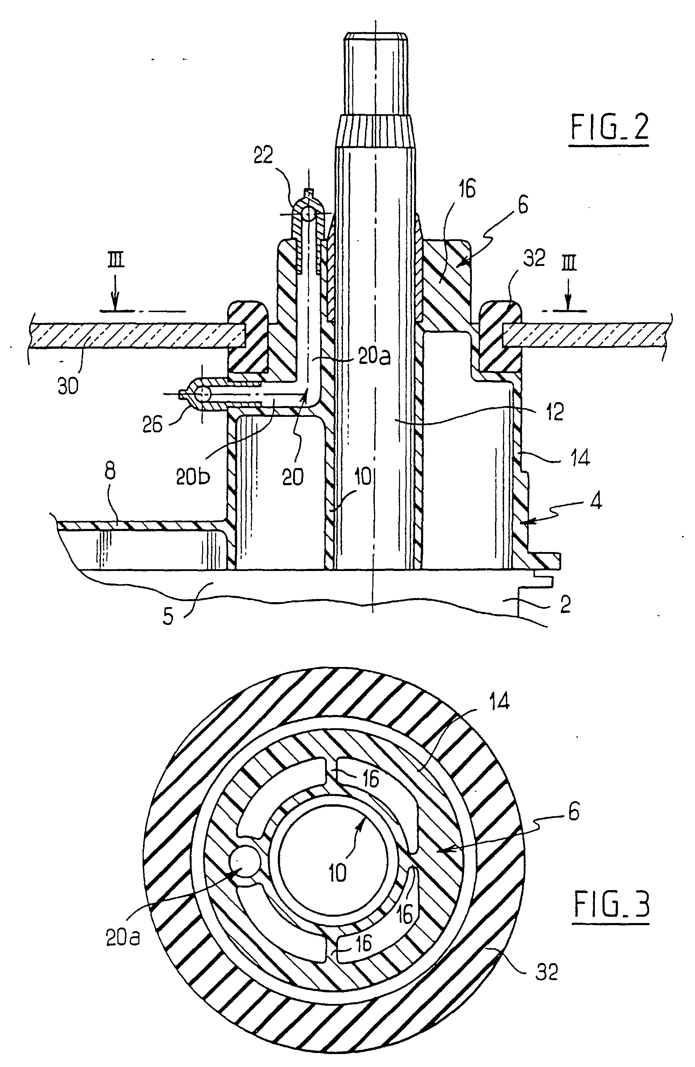

En référence aux figures 1 à 3, dans un premier mode de réalisation, le motoréducteur comporte un socle 2 présentant un fond et des parois latérales, et un couvercle 4 ou plaque de fermeture, adapté à venir obturer le socle 2 au niveau des parois latérales en étant opposé au fond. Le socle 2 et le couvercle 4 constituent un carter du motoréducteur, et par cette disposition, définissent une enceinte intérieure fermée 5 du carter.

Le couvercle 4 comporte un fût 6 d'un seul tenant avec le couvercle, s'étendant en saillie d'une paroi 8 sensiblement plane du couvercle, vers l'extérieur du carter.

Le fût 6 comprend une paroi ayant une jupe cylindrique interne 10 s'étendant de l'une à l'autre des extrémités axiales du fût. Le motoréducteur comporte un arbre de sortie 12 reçu coaxialement dans le logement ainsi défini par la jupe 10 et ayant une extrémité axiale émergeant à l'extérieur du fût à une extrémité libre du fût pour le montage d'un balai d'essuie-glace sur l'arbre. La jupe interne 10 assure le guidage à rotation de l'arbre de sortie 12 par rapport au carter. L'arbre est mobile à rotation autour de son axe et est entraîné suivant un mouvement alternatif par un mécanisme de transformation de mouvement d'un type connu en soi, logé dans l'enceinte 5 et actionné par un moteur du motoréducteur accolé au carter du motoréducteur.

Le fût 6 présente une jupe externe 14 s'étendant à distance de la jupe interne 10 et coaxialement à celle-ci. La jupe externe 14 présente trois tronçons longitudinaux successifs tous trois de forme cylindrique, ayant des diamètres respectifs se rétrécissant depuis la plaque 8 jusqu'à l'extrémité libre du fût. Des nervures de renfort 16 disposées suivant une orientation radiale à l'axe du fût relient la jupe interne 10 au tronçon le plus étroit de la jupe externe 14.

Le fût 6 délimite un conduit 20 défini tout entier dans la paroi du fût. Le conduit 20 présente un premier tronçon allongé rectiligne 20a, parallèle à l'axe du fût, ayant une extrémité débouchant au voisinage de l'extrémité libre du fût et s'étendant au niveau des deux tronçons les plus étroits de la jupe externe 14. Le premier tronçon 20a est extérieur et distant de la jupe 10 et de l'arbre 12. De plus, ce tronçon présente une section transversale à son axe longitudinal s'étendant tout entière d'un même côté de la jupe et de l'arbre. Le conduit 20 présente un deuxième.tronçon allongé rectiligne 20b, perpendiculaire et radial à l'axe du fût, ayant une extrémité débouchant à l'extérieur du fût 6 au niveau du tronçon le plus large de la jupe externe 14. Les deux tronçons 20a, 20b sont perpendiculaires l'un à l'autre et communiquent l'un avec l'autre par leurs autres extrémités qui se joignent, donnant ainsi au conduit une forme en "L". Ce conduit 20 est isolé de l'enceinte intérieure 5 du carter et s'étend dans la paroi du fût 6. Le conduit 20 s'étend à distance de l'axe du fût.

L'extrémité libre du premier conduit 20a reçoit au choix soit un gicleur, soit un raccord 22 connecté à une extrémité d'un tuyau 24 adapté à être relié à un gicleur du véhicule. L'extrémité libre du deuxième conduit 20b reçoit un raccord 26 connecté à une extrémité d'un tuyau 28 adapté à être relié à un réservoir de liquide de nettoyage de vitre.

Le motoréducteur est en l'espèce destiné à être monté au pare-brise arrière 30 d'un véhicule automobile, le fût 6 étant introduit dans un alésage du pare-brise avec le tronçon médian du fût s'étendant en regard du chant du pare-brise. Une bague de joint 32 est interposée entre ce tronçon et ce chant. Le conduit 20 permet de transporter du liquide de nettoyage depuis le réservoir, à travers le pare-brise arrière 30 jusqu'à un gicleur qui propulse ce liquide en direction de la face externe du pare-brise. Le liquide est transporté dans le conduit 20 en étant isolé de l'enceinte intérieure 5, et sans traverser cette enceinte.

Le couvercle 4 comporte en outre des branches 36 adaptées à recevoir des moyens de fixation du carter au véhicule, tels que des assemblages vis-écrou, par exemple avec interposition d'éléments d'amortissement. Ainsi, les branches 36 assurent la fixation du motoréducteur à la structure interne du véhicule.

En l'espèce, le couvercle 4 avec le fût 6 et les branches 36 est d'un seul tenant et est constitué en matière plastique moulée.

La figure 4 présente un deuxième mode de réalisation du motoréducteur dans lequel les éléments analogues portent des références augmentées de 100. Cette fois, la face externe du fût 106 est également sensiblement cylindrique, la jupe interne et la jupe externe étant confondues. Le couvercle 104 délimite à lui seul le conduit 120 mais ce conduit, également en forme de "L", s'étend cette fois à distance de la paroi externe du fût 106. Le conduit 120 est ici défini par deux manchons délimitant respectivement les tronçons 120a et 120b disposés l'un par rapport à l'autre comme dans le précédent mode. Les deux manchons s'étendent en saillie de la paroi 108 du couvercle 104, les deux manchons étant reliés à la paroi par leurs extrémités communes communiquant l'une avec l'autre. Le manchon parallèle au fût 106 est relié à celui-ci par une nervure de renfort 140.

Le motoréducteur selon l'invention réduit les problèmes de corrosion habituellement rencontrés lors du contact du liquide de nettoyage avec le motoréducteur (notamment lorsque le motoréducteur comporte des éléments en magnésium). Il nécessite l'assemblage d'un nombre réduit de pièces pour un transport étanche du liquide de nettoyage.

Bien entendu, on pourra apporter à l'invention de nombreuses modifications sans sortir du cadre de celle-ci ,pour autant que l'invention demeure définie par les revendications. Le conduit pourra être délimité par le socle.

## Revendications

1. Motoréducteur d'essuie-glace pour véhicule automobile, comportant un carter comprenant un socle (2; 102) et un couvercle (4; 104) adapté à obturer le socle en définissant une enceinte intérieure (5) du carter, le motoréducteur présentant un conduit (20; 120) adapté à transporter un liquide, isolé de l'enceinte intérieure (5) et délimité par un élément parmi le socle (2; 102) et le couvercle (4; 104), le motoréducteur comprenant un arbre de sortie (12), **caractérisé en ce que** le conduit s'étend sur toute sa longueur à l'extérieur de l'arbre.

2. Motoréducteur selon la revendication 1, **caractérisé en ce que** le conduit (20; 120) s'étend à distance de l'arbre (12).

3. Motoréducteur selon la revendication 1 ou 2, **caractérisé en ce que** le conduit (20; 120) s'étend d'un seul côté de l'arbre (12).

4. Motoréducteur selon l'une quelconque des revendications 1 à 3, **caractérisé en ce que** l'élément (4; 104) délimitant le conduit (20; 120) est en matière plastique.

5. Motoréducteur selon l'une quelconque des revendications 1 à 4, **caractérisé en ce que** l'élément (4; 104) délimitant le conduit comprend un fût (6; 106) adapté à recevoir l'arbre de sortie (12) du motoréducteur, le conduit (20; 120) s'étendant suivant une direction générale parallèle au fût.

6. Motoréducteur selon la revendication 5, **caractérisé en ce que** le conduit (20) s'étend dans la paroi du fût (6).

7. Motoréducteur selon la revendication 5, **caractérisé en ce que** le conduit (120) s'étend à distance de la paroi du fût (106) :

8. Motoréducteur selon l'une quelconque des revendications 1 à 7, **caractérisé en ce que** l'élément (4; 104) délimitant le conduit comprend des organes (36) de fixation du motoréducteur au véhicule.

9. Motoréducteur selon l'une quelconque des revendications 1 à 8, **caractérisé en ce qu'**il s'agit 5 d'un motoréducteur pour essuie-glace arrière.

10. Carter pour motoréducteur d'essuie-glace de véhicule automobile, comprenant un socle (2; 102) et un couvercle (4; 104) adapté à obturer le socle en définissant une enceinte intérieure (5) du carter, l' un des éléments 10 parmi le socle (2; 102) et le couvercle (4; 104) délimitant un conduit (20; 120) adapté à transporter un liquide et isolé de l'enceinte intérieure (5), **caractérisé en ce que** l'élément délimitant le conduit présente un logement adapté à recevoir un arbre de 15 sortie (12) du motoréducteur, le conduit (20; 120) étant extérieur au logement.

## Patentansprüche

1. Motor-Getriebe-Einheit eines Scheibenwischers für Kraftfahrzeuge mit einem Gehäuse mit einem Sockel (2; 102) und einem Deckel (4; 104), der den Sockel verschließen kann, wobei er eine innere Umhüllung (5) des Gehäuses definiert, wobei die Motor-Getriebe-Einheit eine Leitung (20; 120) aufweist, die eine Flüssigkeit transportieren kann, von der inneren Umhüllung (5) isoliert ist und durch eines der Elemente Sockel (2; 102) und Deckel (4; 104) begrenzt wird, wobei die Motor-Getriebe-Einheit eine Ausgangswelle (12) umfaßt, **dadurch gekennzeichnet, daß** sich die Leitung auf ihrer gesamten Länge außerhalb der Welle erstreckt.

2. Motor-Getriebe-Einheit nach Anspruch 1, **dadurch gekennzeichnet, daß** sich die Leitung (20; 120) in einem Abstand von der Welle (12) erstreckt.

3. Motor-Getriebe-Einheit nach Anspruch 1 oder 2, **dadurch gekennzeichnet, daß** sich Leitung (20; 120) nur auf einer Seite der Welle (12) erstreckt.

4. Motor-Getriebe-Einheit nach einem der Ansprüche 1 bis 3, **dadurch gekennzeichnet, daß** das die Leitung (20; 120) begrenzende Element (4; 104) aus Kunststoff ausgeführt ist.

5. Motor-Getriebe-Einheit nach einem der Ansprüche 1 bis 4, **dadurch gekennzeichnet, daß** das die Leitung begrenzende Element (4; 104) einen Schaft (6; 106) umfaßt, der eine Ausgangswelle (12) der Motor-Getriebe-Einheit aufnehmen kann, wobei sich die Leitung (20; 120) entlang einer zum Schaft parallelen Gesamtrichtung erstreckt.

6. Motor-Getriebe-Einheit nach Anspruch 5, **dadurch gekennzeichnet, daß** sich die Leitung (20) in der Wand des Schafts (6) erstreckt.

7. Motor-Getriebe-Einheit nach Anspruch 5, **dadurch gekennzeichnet, daß** sich die Leitung (120) in einem Abstand von der Wand des Schafts (106) erstreckt.

8. Motor-Getriebe-Einheit nach einem der Ansprüche 1 bis 7, **dadurch gekennzeichnet, daß** das die Leitung begrenzende Element (4; 104) Befestigungsorgane (36) zur Befestigung der Motor-Getriebe-Einheit am Fahrzeug umfaßt.

9. Motor-Getriebe-Einheit nach einem der Ansprüche 1 bis 8, **dadurch gekennzeichnet, daß** es sich um eine Motor-Getriebe-Einheitfür einen Heckscheibenwischer handelt.

10. Gehäuse für die Motor-Getriebe-Einheit eines Kraftfahrzeug-Scheibenwischers mit einem Sockel (2; 102) und einem Deckel (4; 104), der den Sockel verschließen kann, wobei er eine innere Umhüllung (5) des Gehäuses definiert, wobei eines der Elemente Sockel (2; 102) und Deckel (4; 104) eine Leitung (20; 120) begrenzt, die eine Flüssigkeit transportieren kann und von der inneren Umhüllung isoliert (5) ist, **dadurch gekennzeichnet, daß** das die Leitung begrenzte Element eine Aufnahme aufweist, die eine Ausgangswelle (12) der Motor-Getriebe-Einheit aufnehmen kann, wobei sich die Leitung (20; 120) außerhalb der Aufnahme befindet.

## Claims

1. A wiper motor unit for a motor vehicle, including a case. comprising a base (2; 102) and a cover (4; 104) adapted to close the base and define an inside enclosure (5) of the case, the motor unit having a duct (20; 120) suitable for conveying a liquid, which duct is isolated from the inside enclosure (5) and is defined by one element of the base (2; 102) and the cover (4; 104), the motor unit including an outlet shaft (12) and being **characterized in that** the duct extends along its entire length outside the shaft.

2. A motor unit according to claim 1, **characterized in that** the duct (20; 120) extends at a distance from the shaft (12).

3. A motor unit according to claim 1 or 2, **characterized in that** the duct (20; 120) extends on one side only of the shaft (12).

4. A motor unit according to any one of claims 1 to 3, **characterized in that** the element (4; 104) defining the duct (20; 120) is made of plastics material.

5. A motor unit according to any one of claims 1 to 4, **characterized in that** the elements (4; 104) defining the duct comprises a shank (6; 106) adapted to receive the outlet shaft (12) of the unit, the duct (20; 120) extending in a general direction that is parallel to the shank.

6. A motor unit according to claim 5, **characterized in that** the duct (20) extends in the wall of the shank (6).

7. A motor unit according to claim 5, **characterized in that** the duct (120) extends at a distance from the wall of the shank (106).

8. A motor unit according to any one of claims 1 to 7, **characterized in that** the element (4; 104) defining the duct also includes members (36) for fixing the motor unit to the vehicle.

9. A motor unit according to any one of claims 1 to 8, **characterized in that** it is a motor unit for a back window wiper.

10. A case for a wiper motor unit for a motor vehicle, the case comprising a base (2; 102) and a cover (4; 104) adapted to close the base and to define an inside enclosure (5) of the case, one of the elements of the base (2; 102) and the cover (4; 104) defining a duct (20; 120) that is adapted to convey a liquid and that is isolated from the inside enclosure (5), the case being **characterized in that** the element defining the duct has a housing adapted to receive an outlet shaft (12) of the motor unit, with the duct (20; 120) being outside the housing.
